# EUROPÄISCHE PATENTANMELDUNG

(11) **EP 0 543 055 A1**
(43) Veröffentlichungstag der Anmeldung: **26.05.1993**
(21) Anmeldenummer: 91119974.3
(22) Anmeldetag: 22.11.1991
(51) Int. Cl.: E04B 2/28, B28B 11/12, B28D 1/18

(54) **Mauerstein**

(71) Anmelder: YTONG AG, D-80797 München (DE)
(72) Erfinder: Bayer, Peter, Dipl.-Ing., W-8899 Rettenbach (DE); Felbermeir, Johann, W-8859 Ludwigsmoos (DE)
(74) Vertreter: Patentanwälte Dr. Solf & Zapf

(57) **Zusammenfassung**

Die Erfindung betrifft einen quaderförmigen Mauerstein (3), insbesondere aus Gasbeton, mit Greifhilfe (4), die in der Nähe einer Stoßfläche (31) in einer senkrecht zu dieser verlaufenden Steinseitenfläche (30) in Gestalt eines im Querschnitt im wesentlichen rechteckigen Schlitzes eingelassen ist, dessen Tiefe seine Breite übertrifft, wobei die Schlitzwände im wesentlichen steil abfallen. Durch diese Ausbildung des Schlitzes wird eine ergonomische Greifhilfe geschaffen, die aufgrund ihrer Ausbildung ein relativ geringes Hohlvolumen in dem Mauerstein festlegt, wodurch der Mauerstein keine nennenswerte Querschnittschwächung erleidet.

Die Erfindung betrifft ebenso die Vorrichtung zur Ausbildung der Greifhilfe in dem Mauerstein, in welche die Antriebseinrichtung einen Kurbelantrieb (2) umfaßt, an den antriebseitig das Fräßwerkzeug (1) zur Ausbildung der Greifhilfe angeschlossen ist, sowie das Verfahren zum Herstellen des Mauersteins mittels der Vorrichtung.

## Beschreibung

Die Erfindung betrifft einen quaderförmigen Mauerstein der im Oberbegriff des Anspruchs 1 angegebenen Art, also einen Mauerstein mit Griffhilfe.

Die Belastung von Maurern beim Vermauern heute üblicher großformatiger Mauersteine am Arbeitsplatz ist erheblich. Aus diesem Grunde wurden durch die Berufsgenossenschaft zum Schutz der Maurer Grenzwerte für die Steingewichte festgelegt, und die Hersteller größerer Mauersteine wurden verpflichtet, diese mit Griffhilfen auszustatten.

Griffhilfen für Mauersteine sind in unterschiedlichsten Ausgestaltungen bekannt geworden. Gemeinsam ist sämtlichen Ausgestaltungen, daß nut- oder schlitzförmige Ausnehmungen in einer Seitenfläche des quaderförmigen Mauersteins eingelassen sind, und zwar in unmittelbarer Nähe zu einer vertikal zu dieser Fläche verlaufenden weiteren Mauersteinfläche. So ist es beispielsweise aus der DE-OS 40 08 582 bekannt, die Greifhilfe in Gestalt einer im wesentlichen halbkreisförmigen Nut auszubilden, die mit ihren Enden in die Mauersteinseitenfläche mündet, die senkrecht zu der Fläche verläuft, in welcher die halbkreisförmige Nut ausgebildet ist. Hergestellt wird diese Greifhilfe mittels eines Fräsers mit kreisförmigen Schneidkanten, der an die Seitenflächen zweier spiegelbildlich aufeinandergesetzter Mauersteine angesetzt und in diese hineingetrieben wird. Dieser bekannte Mauerstein läßt mit Bezug auf seine Griffhilfe unter ergonomischen Gesichtspunkten zu wünschen übrig, und zwar unter anderem wegen der kreisförmigen Griffläche. Ein weiterer Nachteil dieses bekannten Mauersteins besteht darin, daß das Hohlvolumen der Greifhilfe wesentlich größer ist, als es unbedingt notwendig ist, was eine unerwünschte Querschnittsschwächung des Mauersteins zur Folge hat.

Ein weiterer quaderförmiger Mauerstein mit Greifhilfe ist aus dem DE-GM 88 13 600 bekannt. Demnach ist die Greifhilfe an einer Mauersteinseitenfläche als kreisförmig umlaufende geschlossene Nut ausgebildet, und zwar mit einem Radius derart, daß diese Nut mit ihren Außenwänden relativ nahe an den Steinkanten zu liegen kommt. Auch für diese Greifhilfe gilt das vorstehend Gesagte, nämlich eine unzureichende ergonomische Gestaltung, wobei ein unnötig großes Hohlvolumen für die Greifhilfe eine Querschnittsschwächung des Steins zur Folge hat.

Ein quaderförmiger Mauerstein mit Greifhilfe der eingangs genannten Art ist aus dem DE-PS 35 20 716 bekannt. Im Gegensatz zu den vorstehend abgehandelten Mauersteinen mit halbkreisförmigem bzw. kreisförmigem Verlauf der Greifhilfe ist diese bekannte Greifhilfe durch eine rechteckige Eingangskontur gekennzeichnet. Der Schlitzverlauf dieser Greifhilfe ist jedoch so gewählt, daß sich die beiden schmalen einander gegenüberliegenden Schlitzwände mit zunehmender Schlitztiefe verjüngen. Diese Griffhilfenform wird erzeugt mittels einer rotierenden Fräse, die in radialer Richtung in den Mauerstein hineingetrieben wird. Bedenkt man, daß unter ergonomischen Gesichtspunkten die Greifhilfe so tief in den Stein eingreifen sollte, daß wenigstens die zwei vordersten Fingerglieder eingreifen können, so hat dies im Falle dieses bekannten Mauersteins zur Folge, daß entsprechend tief gefräst werden muß, wodurch aufgrund der Fräsgeometrie das Volumen der erzeugten Greifhilfe zwei- bis dreimal so groß ist als es notwendig wäre. Eine derart große Greifhilfe bedeutet eine wesentliche Querschnittsschwächung des Mauersteins. Wenn andererseits geringe Wandfestigkeiten vermieden werden sollen, erstreckt sich die Greifhilfe nicht weit genug in den Mauerstein hinein, und ist deshalb unter ergonomischen Gesichtspunkten wenig brauchbar.

Die Aufgabe der Erfindung besteht darin, einen quaderförmigen Mauerstein der eingangs genannten Art mit Bezug auf seine Greifhilfe derart zu verbessern, daß diese ohne eine wesentliche Schwächung der Steinwandfestigkeit ergonomisch besonders günstig ist.

Gelöst wird diese Aufgabe durch die kennzeichnenden Merkmale des Anspruchs 1. Vorteilhafte Weiterbildungen der Erfindung sind in den vom Anspruch 1 abhängigen Ansprüchen angegeben. Eine vorteilhafte Vorrichtung zur Ausbildung der Greifhilfe in dem erfindungsgemäßen Mauerstein ist in den Ansprüchen 13 bis 27 angegeben, und ein vorteilhaftes Verfahren zur Herstellung des Mauersteins ist in den Ansprüchen 28 bis 30 genannt.

Das Griffloch bzw. der Griffschlitz ist also erfindungsgemäß mit allseits steil abfallenden Wänden ausgebildet, wodurch sich auf der Grundlage eines minimalen Hohlvolumens eine hinreichend tiefe Griffhilfe ergibt, die den ergonomischen Anforderungen an eine Greifhilfe voll Rechnung trägt, ohne die statischen Gesichtspunkte außer Acht zu lassen. Vielmehr ist die Greifhilfe des erfindungsgemäßen Mauersteins unter statischen Gesichtspunkten wesentlich unkritischer als die Greifhilfen herkömmlicher Mauersteine, die bei hinreichender Eingrifftiefe das mehrfache Hohlvolumen aufweisen als die Greifhilfe des erfindungsgemäßen Mauersteins.

Gemäß einer besonders vorteilhaften Weiterbildung der Erfindung ist die als Griffläche dienende Schlitzwand des Griffschlitzes, das ist die Schlitzwand, die der Stoßfläche unmittelbar gegenüber liegt, die also zur Außenseite des Mauersteins weist, hinterschnitten ausgebildet, wodurch der Mauerstein mit besonders großer Sicherheit ergriffen und hantiert werden kann.

Vorteilhafterweise umfaßt die Greifhilfe des erfindungsgemäßen Mauersteins nicht nur einen Eingriffschlitz mit im wesentlichen steil abfallenden Wänden, sondern geht in die parallel zum Schlitz verlaufende Stoßfläche durch eine Aussparung über, deren Bodenfläche eben oder leicht konkav gewölbt ist, wodurch sich eine noch bessere Abstützung der Hand am Mauerstein ergibt.

Die erfindungsgemäß vorgesehene Fräsvorrichtung zur Herstellung der Greifhilfe in dem quaderförmigen Mauerstein basiert auf einem Kurbelantrieb für das Fräswerkzeug, der es gestattet, bei Einhaltung kleiner Fräsradien den Griffschlitz in dem Mauerstein relativ tief auszuprägen. Erreicht wird dies durch die spezielle Charakteristik des an sich bekannten Kurbeltriebs mit einer vor- und rückbewegten Schubstange, die neben der Vor- und Zurückbewegung eine kreisende Bewegung ausführt, deren Radius konstruktiv mit einfachen Mitteln bestimmt werden kann. Grundsätzlich ist es dabei möglich, die Fräsradien kleiner zu wählen als die Breite der zu erstellenden Greifhilfe bzw. des Eingriffschlitzes, dessen gewünschte Breite entsprechend dem Handmaß einer männlichen Person dadurch erzeugt werden kann, daß der Kurbelantrieb in seiner Schwingebene hin- und herbewegt wird. In jedem Falle läßt sich durch die Verwendung eines Kurbeltriebs bei an sich beliebig kleinen Fräsradien ein Griffschlitz mit grundsätzlich steil abfallenden Wänden in den Mauerstein vortreiben, der den ergonomischen Anforderungen an die Grifftiefe und Griffbreite exakt entspricht, ohne daß, wie beim Stand der Technik, zugunsten einer ergonomisch hinreichenden Grifftiefe eine wesentlich zu stark ausgeprägte Breite des Griffschlitzes in Kauf genommen werden muß.

Ein weiterer Vorteil des erfindungsgemäß vorgesehenen Kurbeltriebs für die Fräswerkzeuge zur Erstellung des Griffschlitzes besteht darin, daß der vorstehend erwähnte Hintergriff im Bereich der Schlitzgriffwand mit einfachen Mitteln erzeugt werden kann, nämlich durch speziell geformte Fräswerkzeuge und/oder durch eine Bewegung der Fräswerkzeuge bei ausgeschaltetem Kurbeltrieb in einer Ebene senkrecht zur Schwingebene des Kurbeltriebs.

Das erfindungsgemäß vorgesehene Verfahren zur Ausbildung der Greifhilfe in dem erfindungsgemäßen Mauerstein zeichnet sich durch Kostengünstigkeit aus und ist zur Massenproduktion geeignet, da daß es die gleichzeitige Erzeugung von Greifhilfen in einer Vielzahl von Mauersteinen erlaubt. Dem Verfahren liegen ungehärtete bzw. grüne Mauersteine zugrunde, die in mehreren Schichten übereinander und nebeneinander angeordnet sind. Eine solche Anordnung grüner Mauersteine ergibt sich bei herkömmlichen Herstellverfahren, dadurch, daß das grüne Mauersteinmaterial als großer Quader ausgeformt auf einem Wagen bzw. einem Härteboden vorliegt, und dieser Quader wird in die einzelnen Mauersteine beispielsweise mit Hilfe von Drähten unterteilt, die vertikal und horizontal mehrfach durch den großen Quaderblock geführt werden, wodurch dieser in die gewünschten Mauersteine unterteilt wird, die in ihrem grünen Zustand unmittelbar aneinandergrenzend vorliegen, und zwar in einer Gesamtanordnung, die dem ursprünglichen Quaderblock entspricht. An diese Anordnung wird die vorstehend genannte Fräseinrichtung mit Kurbelantrieb vorzugsweise an die Steinschmalseiten angesetzt, wobei die Fräswerkzeuge spiegelsymmetrisch derart angeordnet sind, daß die Greifhilfen bzw. Griffmulden gleichzeitig für zumindest zwei aneinandergrenzende grüne Mauersteine eingebracht werden können, und zwar derart, daß die Symmetrieebene in der selben Ebene liegt, wie die Stoßflächen der aneinandergrenzenden Mauersteine. Die Fräswerkzeuge können entlang der genannten Symmetrieebene in mehreren Paaren vorliegen, so daß die in einem Block übereinanderliegenden Mauersteine paarweise gleichzeitig bearbeitet werden können.

Nachfolgend soll die Erfindung anhand der Zeichnung näher erläutert werden; in dieser zeigen:
- Fig. 1: eine Ansicht einer ersten Ausführungsform einer Fräsvorrichtung zur Erzeugung der erfindungsgemäßen Greifhilfe in einer Draufsicht auf die Schwingebene des Kurbelantriebs,
- Fig. 2: eine Ansicht der Anordnung von Fig. 1 bei Draufsicht auf eine zu der Schwingebene des Kurbelantriebs senkrecht verlaufenden Ebene,
- Fig. 3a: eine Draufsicht auf diejenige Seitenfläche des mit der Vorrichtung in den Fig. 1 und 2 erzeugten quaderförmigen Mauersteins, in die der Griffschlitz eingelassen ist,
- Fig. 3b: eine Draufsicht auf die senkrecht zur Steinfläche in Fig. 3a verlaufende Stoßfläche des Mauersteins,
- Fig. 3c: den Schnitt entlang A-A in Fig. 3a,
- Fig. 4: eine abgewandelte Ausführungsform der Fräswerkzeuge der Vorrichtung gemäß den Fig. 1 und 2,
- Fig. 4a bis 4c: Ansichten des mit den Fräswerkzeugen in Fig. 4 erzeugten quaderförmigen Mauersteins entsprechend den Darstellungen in den Figuren 3a bis 3c,
- Fig. 5: eine weitere Ausführungsform einer Fräsvorrichtung zur Erzeugung der Greifhilfe in dem erfindungsgemäßen Mauerstein in einer Fig. 1 entsprechenden Darstellung,

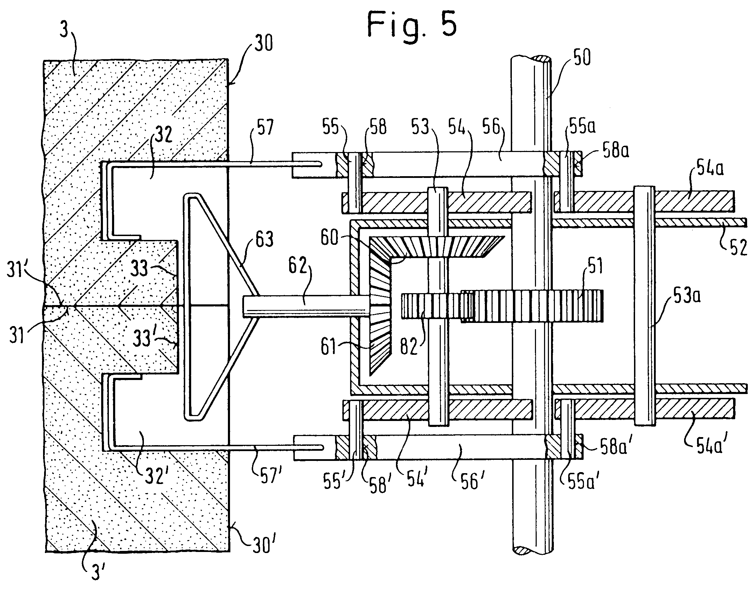

- Fig. 5: eine Variante der Fräsvorrichtung in Fig. 5 und

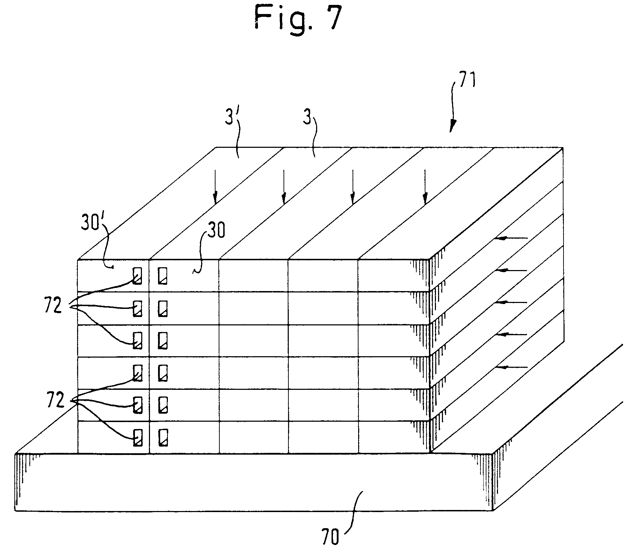

- Fig. 7: eine schematische Darstellung zur Verdeutlichung der Herstellung des erfindungsgemäßen Mauersteins.

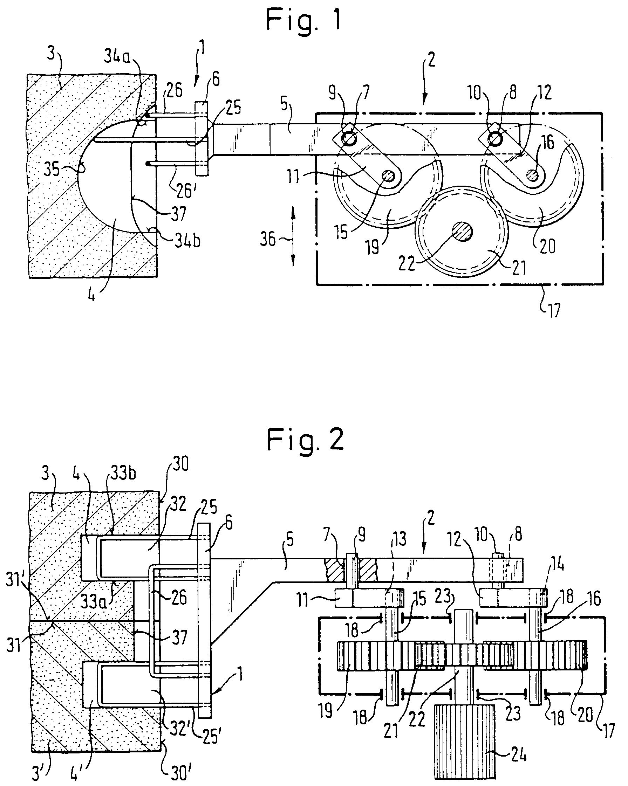

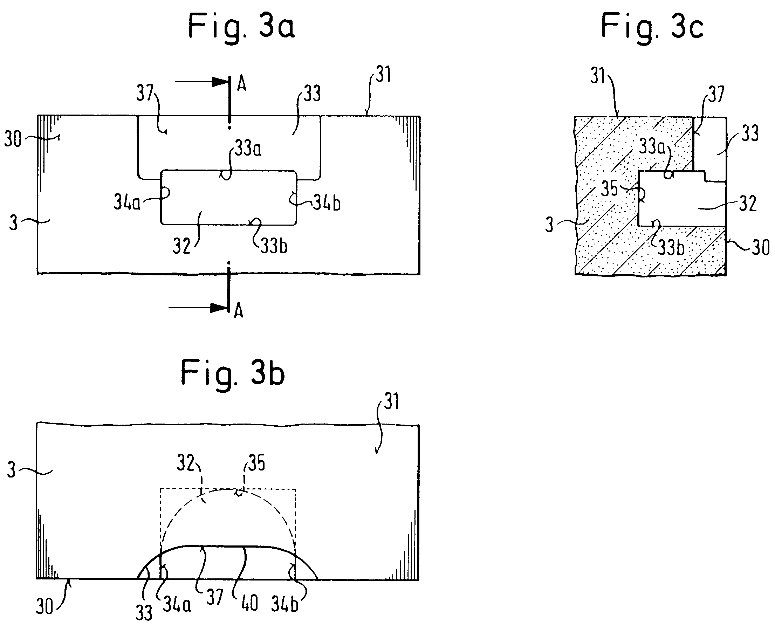

In den Fig. 1 und 2 ist eine Ausführungsform zur Ausbildung der Greifhilfe in dem erfindungsgemäßen quaderförmigen Mauerstein dargestellt, und die Gestalt der mit dieser Vorrichtung erzielbaren Greifhilfe ist in den Fig. 3a bis 3c gezeigt.

Wie aus den Fig. 1 und 2 hervorgeht, basiert die Vorrichtung zur Ausbildung der Greifhilfe in dem erfindungsgemäßen Mauerstein auf einer Fräswerkzeug-Anordnung 1, die von einem Kurbeltrieb 2 angetrieben wird, um in einem Gasbeton-Mauerstein 3 eine Greifhilfe 4 auszubilden. Die Antriebseinrichtung 2 umfaßt eine Schubstange 5, an deren einem Ende ein Werkzeugträger 6 in Gestalt einer Trageplatte ausgebildet ist. Die Schubstange 5 weist zwei in Längserstreckung der Schubstange 5 voneinander beabstandete Bohrungen 7 und 8 auf, die senkrecht zur Erstreckungsrichtung der Stange 5 verlaufen. In den Bohrungen 7 und 8 sind Zapfen 9 und 10 drehbar eingesetzt, die exzentrisch auf Hebeln 11 und 12 angeordnet und fest mit diesen verbunden sind. Die Hebel 11 und 12 bilden zusammen mit den Zapfen 8 und 9 die Kurbeln des Kurbelantriebs. Die Hebel 11 und 12 weisen Bohrungen 13 und 14 auf, in welche Wellen 15 und 16 fest, d.h. drehfest und axial unverschieblich eingesetzt sind. Die Wellen 15 und 16 sind in einem Chassis 17 drehgelagert, und zwar in Lagern 18, die in Richtung der Wellenachsen voneinander beabstandet in dem Chassis 17 angeordnet sind. Jeweils zwischen den zugehörigen Lagern 18 für die jeweilige Welle 15 bzw. 16 sind auf diesen Wellen Zahnräder 19 und 20 angeordnet und fest, d.h. drehfest und axial unverschieblich mit diesen Wellen verbunden. Mit den Zahnrädern 19 und 20 kämmt gemeinsam ein Zahnrad 21, das fest, d.h. drehfest und axial unverschieblich, auf einer Welle 22 sitzt, die in Lagern 23 gelagert ist, die ebenfalls in dem Chassis 17 angeordnet sind. An die Welle 22 ist ein Antriebsmotor 23 angeschlossen, der beispielsweise als Elektromotor ausgebildet sein kann. Vorzugsweise ist die Antriebswelle 22 identisch mit der Abtriebswelle des Motors 23.

Die Schubstange 6 führt in an sich bekannter Weise eine Schwingbewegung in der Ebene aus, die der Zeichnungsebene in Fig. 1 entspricht. Diese Schwingbewegung setzt sich zusammen aus einer translatorischen Bewegung der Schubstange 5 entlang ihrer Erstreckungsrichtung und einer Kreisbewegung, deren Radius festgelegt ist durch den Abstand des Zapfens 9 bzw. 10 zu der Welle 15 bzw. 16 entlang dem Hebel 11 bzw. 12. Der maximale Hub der Schubstange bzw. die Wegstrecke ihrer translatorischen Bewegung entspricht dem Doppelten dieses Radius.

Wie am besten aus Fig. 2 hervorgeht, sind an dem Werkzeugträger 6 zwei Paar unterschiedlich gestaltete Werkzeuge angebracht und zwar in Gestalt von U-förmig gebogenen Profildrähte, die mit ihren freien Schenkelenden in dem Träger 6 verankert sind. Die Schenkel der U-förmigen Profildrähte verlaufen parallel zur Erstreckungsrichtung der Schubstange 5, während die Basen der U-förmigen Profildrähte lotrecht zu der Schubstange verlaufen. Die U-Profile der Werkzeuge liegen in zueinander parallelen Ebenen, die senkrecht zur in Fig. 1 dargestellten Schwingebene verlaufen. Die Profildrähte 25 und 25' sind länger und schmäler ausgebildet, als die Profildrähte 26 und 26'. Die längeren Profildrähte 25 und 25' liegen seitlich zueinander versetzt in einer gemeinsamen Ebene, die der Zeichnungsebene in Fig. 2 entspricht und senkrecht zur Schwingebene des Kurbeltriebs 2 verläuft, die in Fig. 1 dargestellt ist. Die kürzeren Profildrähte 26 und 26' sind ebenfalls seitlich zueinander versetzt, jedoch so, daß sie in zwei zueinander parallel verlaufenden voneinander beabstandeten Ebenen zu liegen kommen, wie dies am besten aus Fig. 1 hervorgeht. Aus Fig. 1 geht auch hervor, daß die kürzen Profildrähte 26 und 26' beidseits der Ebene angeordnet sind, in welcher die längeren Profildrähte 25 und 25' liegen.

Mit der in den Fig. 1 und 2 dargestellten Tandemanordnung der beiden unterschiedlich langen Werkzeuge 25, 25', bzw. 26, 26' können mit einem gemeinsamen Herstellungsschritt Greifhilfen in zwei unmittelbar aneinandergrenzenden Mauersteinen 3 und 3' gleichzeitig hergestellt werden, wie am besten aus Fig. 2 hervorgeht. Bei entsprechender Vervielfachung und Parallelschaltung der in den Fig. 1 und 2 dargestellten Fräsanordnungen kann gleichzeitig eine beliebige Anzahl von Mauersteinen bearbeitet werden, um in diesen Mauersteinen gleichzeitig Greifhilfen auszubilden. Die Kaskadierung der Anordnungen gemäß der Fig. 1 und 2 erfolgt dabei in Richtung der Antriebsachse 22, also senkrecht zur Zeichnungsebene von Fig. 1, wobei bei einer entsprechenden Verlängerung der Antriebsachse 22 sämtliche kaskadierten Kurbeltriebe gemeinsam durch einen einzigen Antriebsmotor 23 angetrieben werden können. Ein dementsprechender, für die Massenproduktion geeignetes Bearbeitungsverfahren ist weiter unten anhand von Fig. 7 beschrieben.

Die Konfigurationen der mit den Fräsanordnungen in Fig. 1 und 2 herstellbaren Greifhilfen gehen aus diesen Figuren in Verbindung mit den Fig. 3a bis 3c hervor. Demnach werden, wie beispielsweise aus Fig. 2 hervorgeht, die Greifhilfen in Gestalt von Schlitzen über Seitenflächen 30 bzw. 30' in zwei Mauersteine 3 und 3' gleichzeitig eingebracht, die mit Stoßflächen 31 und 31' unmittelbar aneinandergrenzen, und zwar derart, daß die Seitenflächen 30 und 30' der beiden Steine 3 und 3' miteinander fluchten.

In Draufsicht auf die Steinseitenflächen 30 bzw. 30' der Steine 3 bzw. 3' wird deutlich, daß die Eingriffskontur des Schlitzes 32 bzw. 32', der unter einem vorgegebenen Abstand zur jeweiligen Stoßfläche 31 bzw. 31' verläuft, rechteckig ist, wobei das Eingriffsrechteck mit seiner langen Seite parallel zu der Stoßfläche 31, 31' verläuft. Das Rechteck 32 weist in Schlitzrichtung einen stufenförmigen Verlauf auf, wobei die Längsseite des Rechtecks 32 in Fig. 3a, die näher an der Kante zur Stoßfläche 31 gelegen ist, tiefer liegt als die andere Längsseite des Rechtecks 32, die an der Seitenfläche 30, 30' verläuft. Diese Stufenbildung kommt dadurch zustande, daß mündend in das Rechteck 32 und die Stoßfläche 31 eine Aussparung ausgebildet ist, die in der Draufsicht von Fig. 3a ebenfalls eine rechteckige Eingriffskontur aufweist und mit 33 bezeichnet ist. Die Aussparung 33 erstreckt sich, wie beispielsweise aus den Fig. 2 und 3c ersichtlich, nicht so weit in den Stein 3 hinein wie der Schlitz 32, der die eigentliche Griffmulde der Greifhilfe bildet, während die Aussparung 33 eine in den Stein hineingesetzte Stütze für die Finger bildet, die abgewinkelt in die Führungshilfe eingreifen, wobei die Fingerspitzen in den Schlitz 32 eingreifen.

Wie weiterhin aus den Fig. 2 und 3c hervorgeht, fallen die Schlitzwände 33a, 33b, die sich an die langen Seiten des Eingriffsrechtecks in den Stein hinein anschließen, lotrecht mit Bezug auf die Seitenfläche 30 bzw. parallel zu der Stoßfläche 31 ab. Im Gegensatz hierzu verlaufen die sich an den Schmalseiten des Eingriffsrechtecks des Schlitzes 32 anschließenden Schlitzwände 34a und 34b zumindest unmittelbar anschließend an das Eingriffsdreieck ebenfalls streng lotrecht abfallend, um mit zunehmender Tiefe in einen gekrümmten Verlauf überzugehen, dessen Krümmungsradius bestimmt ist durch den Radius der Schwingbewegung der Schubstange 5. Da die Schubstange zusätzlich zu der Kreisbewegung auch eine translatorische Bewegung durchführt, erfolgt die Einbringung des Schlitzes 32 mit einer unter ergonomischen Gesichtspunkten hinreichenden Tiefe, trotz des relativ kleinen Radius der Schwingbewegung der Schubstange und damit der Werkzeuge 25, 25'. Der gekrümmte Bodenbereich 35 des Schlitzes 32 kann jedoch ohne weiteres dadurch egalisiert oder planiert werden, daß die gesamte Antriebseinrichtung 2 in Richtung des Pfeils 36 zusätzlich zu der Schwingbewegung des Kurbeltriebs hin- und herverschoben wird. Durch diese Maßnahme lassen sich im wesentlichen über ihre, gesamte Länge steil abfallende Schlitzwände 34a und 34b erzielen, wie in Fig. 3b punktiert angedeutet ist.

Aufgrund der in Richtung der Kreisbewegung der Schubstange 5 versetzten Anordnung der kürzeren Werkzeuge 26 und 26' verläuft der Boden 37 der Aussparung planar, und zwar nicht nur in der Richtung senkrecht zur Schwingebene des Kurbeltriebs, sondern auch in dieser Ebene, wie aus Fig. 1 hervorgeht, wobei lediglich die dort verlaufenden Seitenwände gekrümmt in die Seitenflächen 30 bzw. 30' münden.

Wie anhand der Fig. 1 und 2 sowie 3a bis 3c deutlich wird, umfaßt die erfindungsgemäße Griffhilfe einen Eingriffschlitz mit steil abfallenden Wänden, wobei der Schlitz relativ schmal gehalten ist, so daß nicht unnötig viel Material aus dem jeweiligen Mauerstein ausgefräst werden muß. Außerdem stellt diese Griffhilfe eine zwar enge, aber für einen festen Eingriff hinreichend weite Grifftasche dar, die einen bequemen und sicheren Zugriff zu dem jeweiligen Mauerstein gewährleistet.

Zur tiefen Ausbildung des Schlitzes 32 bleibt noch nachzutragen, daß der Kurbeltrieb 2 zusätzlich verfahrbar ist in der Längsrichtung der Schubstange 5, so daß die Grifftiefe entsprechend dem Weg, mit welchem die Schubstange durch Verschiebung des gesamten Kurbeltriebs 2 in den Stein hinein verfahren wird, gesteuert werden kann.

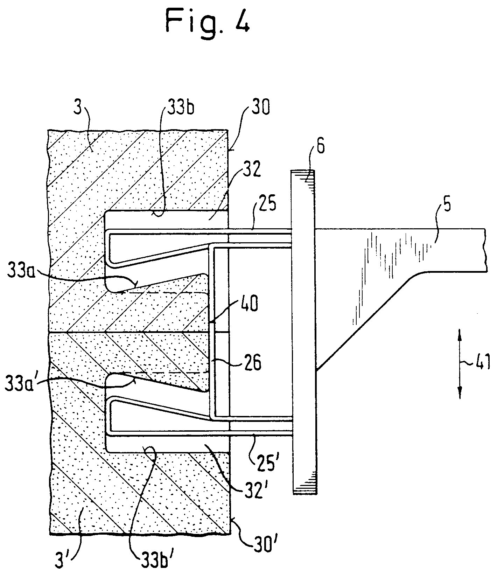

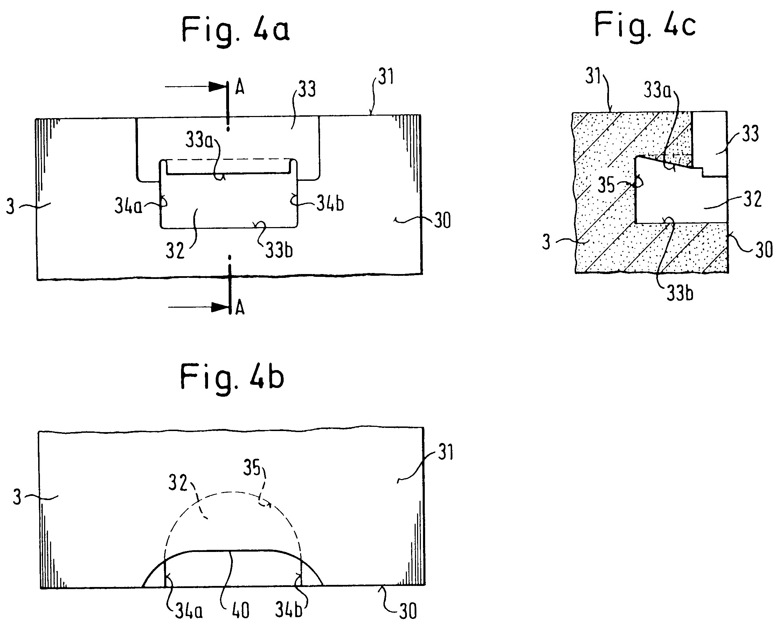

Eine Variante der Fräswerkzeuge in den Fig. 1 und 2 ist in Fig. 4 dargestellt. Die dort gezeigte Ausgestaltung der längeren Werkzeuge gestattet eine hinterschnittene Ausbildung des Griffschlitzes 32, und zwar eine hinterschnittene Ausbildung derjenigen Griffwandung 33a, die in den Boden der Aussparung 40 mündet, die mit dem selben Eräswerkzeug 26 erzeugt wird, wie in den Fig. 1 und 2. Zu diesem Zweck ist der der Wandung 33a bzw. 33a' gegenüberliegende Schenkel des Werkzeugs 25 bzw. 25' geneigt ausgebildet, wobei die Basis des U-förmigen Werkzeugs 25 bzw. 25' schmäler ausgebildet ist als bei der Ausführungsform in den Fig. 1 und 2, weshalb eine Realisierung der in Fig. 4 ersichtlichen Breite des Schlitzes 32 eine Bewegung der Werkzeuge und damit der Schubstange 5, und insbesondere des gesamten Kurbeltriebs 2 in Richtung des Pfeils 41 in Fig. 4 erfordert, entsprechend einer Bewegung in Richtung der Flächennormalen der Zeichnungsebene von Fig. 1. Der Bewegungsablauf, nämlich das Hin- und Herbewegen in Richtung des Doppelpfeils 41 erfolgt dann, wenn die Fräswerkzeuge 32 den Boden des Schlitzes 32 erreicht haben. Durch eine Bewegung der Werkzeuge 25, 25' in Fig. 4 nach oben wird der steile Verlauf der Schlitzwand 33b sowie der geneigte Verlauf der Schlitzwand 33a' und bei der entgegengesetzten Bewegung die steile Schlitzwand 33b' in dem Stein 3' und die schräg verlaufende Schlitzwand 33a im Stein 3 erzeugt. Der Verlauf des mit den Fräswerkzeugen in Fig. 1 herstellbaren Griffschlitzes geht im übrigen aus den Figuren 4a bis 4c hervor, deren Darstellungsweise derjenigen der Fig. 3a bis 3c entspricht, wobei ein konstruktiver Unterschied im Verlauf der hinterschnittenen Wand 33a besteht.

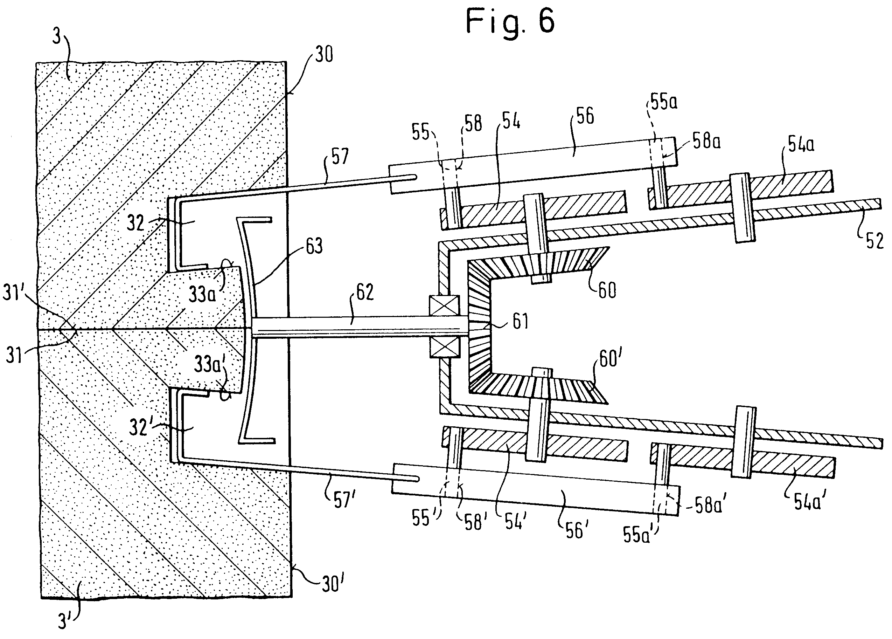

Varianten der in den Fig. 1 und 2 dargestellten Fräsanordnung sind in den Fig. 5 und 6 dargestellt, zusammen mit der Gestalt der mit Hilfe dieser Fräseinrichtungen in zwei aneinandergrenzend angeordneten Mauersteinen herstellbaren Greifhilfen, deren Anordnung derjenigen in Fig. 2 entspricht. Auch bei diesen Fräseinrichtungen handelt es sich um Fräswerkzeuge, die durch einen Kurbelantrieb betätigt werden, wobei der wesentliche Unterschied im Vergleich zu den Antrieben in den Fig. 1 und 2 darin besteht, daß das kürzere Werkzeug zur Erzeugung der Aussparung zwischen den Schlitzen und den aneinandergrenzenden Stoßflächen durch einen ausschließlich drehbetätigten Antrieb angetrieben wird.

Nachfolgend soll zunächst die Variante gemäß Fig. 5 näher beschrieben werden.

Die Gestalt der mit der Anordnung von Fig. 5 erzielbaren Griffhilfen in zwei aneinandergrenzenden Mauersteinen entspricht derjenigen, die aus den Fig. 1 und 2 sowie 3a bis 3c hervorgehen, wobei in Fig. 5 die Schlitzgeometrien mit denselben Bezugszeichen versehen sind, wie in den Fig. 1, 2 und 3a bis 3c.

In der in Fig. 5 dargestellten Anordnung kommen zwei getrennte, jedoch gemeinsam angetriebene Kurbeltriebeinheiten zum Einsatz, wobei eine gemeinsame Antriebswelle 50 an einen nicht dargestellten Motor angeschlossen ist. Wie in Fig. 5 angedeutet, ist die Antriebswelle 50 beidseitig verlängert, um in Richtung ihrer Verlängerung eine Mehrzahl der in Fig. 5 dargestellten Fräseinheiten gemeinsam anzutreiben, wobei in gleicher Weise seitlich fortgesetzt eine Vielzahl weiterer Mauersteine sich an die in Fig. 5 dargestellten Mauersteine 3 und 3' anschließen, und zwar derart, daß die jeweiligen Frontseiten 30 miteinander fluchten.

Die Antriebswelle 50 trägt ein Zahnrad 51, das fest mit der Welle verbunden ist und in einem Gehäuse 52 angeordnet ist, das einen U-förmigen Querschnitt aufweist und Durchbrüche für die Antriebswelle 50 aufweist. Das Zahnrad 51 kämmt mit einem Zahnrad 52, das fest mit einer Welle 53 verbunden ist, die beidseits in dem Gehäuse 52 gelagert ist, über diese vorsteht und auf den vorstehenden Wellenenden Schwungräder 54 und 54' trägt, die gleich ausgebildet und fest mit der Welle 53 verbunden sind. In die Schwungräder 54 und 54' sind jeweils an derselben Position radial außenliegend Zapfen 55 und 55' eingesetzt und fest mit dem jeweiligen Schwungrad verbunden. Einer der Schwungradanordnung 54, 54' entsprechende Schwungradanordnung 54a und 54a' ist zurückgesetzt am Gehäuse 52 vorgesehen. Auch die Schwungräder 54 und 54a tragen fest mit ihnen verbundene Zapfen 55a und 55a'. Eine Zahnradverbindung der Schwungscheiben 54a und 54a' ist jedoch nicht vorgesehen; diese Schwungräder sind vielmehr passiv angetrieben über Schwungstangen 56 und 56', die an ihren vorderen Enden identisch ausgebildete und spiegelsymmetrisch zueinanderverlaufende Werkzeuge 57 bzw. 57' tragen. Die Schwungstangen weisen Lagerbohrungen 58, 58' sowie 58a, 58a', in denen die Zapfen 55, 55' sowie 55a und 55a' gelagert sind.

Die Schwungstangen 56 und 56' stellen damit jeweils Bestandteile eines Kurbeltriebs dar, wie er anhand der Fig. 1 und 2 ausführlich beschrieben worden ist, und zwar einschließlich der Bewegungen der Werkzeuge, die an diese Schubstangen angeschlossen sind, wobei die Werkzeuge 57 im Gegensatz zu den Werkzeugen 25 in den Fig. 1 und 2 lediglich im vorderen Bereich U-förmig gebogen sind. Aufgrund dieser U-Form in Verbindung mit den Kurbelantrieben wird eine Gestalt der Eingriffschlitze 32 und 32' in den Steinen 3 und 3' ausgebildet, die derjenigen der Schlitze 32 und 32' in den Fig. 1 und 2 entspricht.

Die Welle 53 trägt zusätzlich zu dem Zahnrad 52 wenigstens ein, vorzugsweise aber zwei Kegelzahnräder 60 (in Fig. 5 ist lediglich ein solches Kegelzahnrad dargestellt), und die Kegelzahnräder 60 sind fest mit der Welle 53 verbunden und kämmen mit einem Kegelzahnrad 61, das senkrecht zu den Kegelzahnrädern 60 angeordnet und fest mit einer Welle 62 verbunden ist, die in dem Gehäuse 52 drehbar gelagert ist. Bei rotierender Antriebswelle 50 wird die Welle 62 also ebenfalls drehangetrieben. An ihrem Vorderende trägt die Welle 62, die über das Gehäuse 52 hinaus verlängert ist, ein Fräswerkzeug 63, das im wesentlichen dreieckige Gestalt aufweist, wobei die Basisseite des Dreiecks das eigentliche Fräsorgan darstellt, das senkrecht zu der Welle 62 verläuft und bei rotierender Antriebswelle 50 in einer Ebene umläuft, die senkrecht zur Zeichnungsebene der Fig. 5 verläuft. Durch einen Vorschub der Fräsanordnung gemäß Fig. 5 in die aneinandergrenzenden Mauersteine 3 und 3' hinein, ähnlich wie in den Fig. 1 und 2, wird also durch das rotierende Fräswerkzeug 63 Mauersteinmaterial zwischen den Schlitzen 32 und 32' abgetragen, und dadurch die Aussparung 33 bzw. 33' erzielt, und zwar mit einem ebenen Boden, wie dies auch in Fig. 2 dargestellt ist.

Alternativ zu einem ebenen Verlauf des Bodens der Aussparungen 33 und 33' kann dieser mit Vorteil für die Greifunterstützung der Finger auch gekrümmt ausgebildet werden. Hierzu muß das rotierende Werkzeug 63 gemäß Fig. 6 entsprechend gekrümmt ausgebildet werden. Darüber hinaus unterscheidet sich die Antriebsanordnung gemäß Fig. 6 für die Werkzeuge von derjenigen gemäß Fig. 5 im wesentlichen dadurch, daß die beiden Kurbeltriebeinheiten nicht parallel, sondern geneigt zueinander verlaufen, und zwar unter einem spitzen Winkel zueinander derart, daß die Schubstangen mit ihren vorderen, die Werkzeuge tragenden Enden näher beieinanderliegen als mit ihren hintenliegenden Enden, wodurch hinterschnittene außenliegende Schlitzwände 33a und 33a' ausgebildet werden, während des Vortriebs der Werkzeuge 57 und 57' in die Mauersteine 3 und 3' hinein. Außerdem verlaufen die innengelegenen Schlitzwände bei dieser Anordnung der Schubstangen 57 und 57', in der selben Weise geneigt wie die zugehörigen außengelegenen Schlitzwände 33a und 33a'.

Der Aufbau der Antriebseinrichtung von Fig. 6 entspricht im wesentlichen demjenigen von Fig. 5, bis auf die geneigte Anordnung der Schubstangen, der Schwungräder und der Kegelzahnräder, die mit den Schwungrädern verbunden sind, wobei in Fig. 6 die Antriebsübertragung von der Antriebswelle sowie diese im einzelnen nicht dargestellt sind.

Fig. 7 zeigt einen Härteboden 70, auf dem ein quaderförmiger Block 71 aus grünem Mauersteinmaterial angeordnet ist, der mittels nicht dargestellter Drähte entlang der Pfeile in Fig. 7 in einzelne quaderförmige Mauersteine durchtrennt ist, die demnach in einer größeren Anzahl nebeneinander und aufeinander zu liegen kommen, wobei Greifhilfen 72 an den Schmalseiten der Steine 3, 3' eingebracht werden sollen und zwar mittels der vorstehend beschriebenen Fräseinrichtungen, die zur gleichzeitigen Herstellung einer Vielzahl über- und nebeneinander liegender Griffhilfen in aneinandergrenzenden Steinen kaskadiert entlang der Antriebsachse angeordnet sind, wie dies vorstehend beispielsweise anhand der Fig. 1 und 2 beschrieben worden ist.

## Patentansprüche

1. Quaderförmiger Mauerstein, insbesondere aus Gasbeton mit Greifhilfe, die einen Eingriffschlitz umfaßt, der im Bereich wenigstens einer Stoßfläche in eine Seitenfläche des Steins eingelassen ist und in Draufsicht auf diese Seitenfläche eine rechteckige Eingangskontur aufweist, wobei die beiden langen Seiten des Rechtecks im wesentlichen parallel zu der Stoßfläche verlaufen,
dadurch **gekennzeichnet,**
daß die Tiefe des Eingriffschlitzes (32) seine Breite entsprechend der langen Seite der Eingriffsrechteckkontur übertrifft.

2. Mauerstein nach Anspruch 1,
dadurch **gekennzeichnet,**
daß die Wände des Eingriffschlitzes (32) im wesentlichen steil abfallen.

3. Mauerstein nach Anspruch 1 oder 2,
dadurch **gekennzeichnet,**
daß die in die Schmalseiten des Rechtecks mündenden Schlitzwände (34a, 34b) zumindest im Mündungsbereich lotrecht zur Seitenfläche verlaufen, in die der Eingriffschlitz eingelassen ist.

4. Mauerstein nach Anspruch 3,
dadurch **gekennzeichnet,**
daß die in die langen Seiten des rechteckigen Schlitzeingangs mündenden Schlitzwände im wesentlichen eben sind und parallel zueinander sowie parallel zur Stoßfläche (31) verlaufen.

5. Mauerstein nach Anspruch 3,
dadurch **gekennzeichnet,**
daß diejenige der beiden in die langen Seiten des rechteckigen Schlitzeingangs mündenden Schlitzwände (33a), die näher an der Stoßfläche (31) gelegen ist, einen hinterschnittenen Verlauf derart aufweist, daß der Eingriffschlitz zu seinem Boden hin breiter wird.

6. Mauerstein nach einem der Ansprüche 1 bis 5,
dadurch **gekennzeichnet,**
daß der Boden des Eingriffschlitzes im wesentlichen eben ist.

7. Mauerstein nach einem der Ansprüche 1 bis 6,
**gekennzeichnet** durch
eine Aussparung (33) der Mauersteinseitenfläche zwischen Stoßfläche (31) und Schlitz (32).

8. Mauerstein nach Anspruch 7,
dadurch **gekennzeichnet,**
daß der Boden der Aussparung (33) im wesentlichen eben sowie parallel zur Mauersteinseitenfläche (30) verläuft, in welche der Schlitz (32) eingelassen ist.

9. Mauerstein nach Anspruch 8,
**gekennzeichnet** durch
einen konkaven Verlauf der Aussparungsseitenwände.

10. Mauerstein nach einem der Ansprüche 1 bis 9,
dadurch **gekennzeichnet,**
daß der Eingriffschlitz ausgehend von dem Boden der Aussparung (33) in etwa 4 bis 8 cm tief sowie in etwa 8 bis 10 cm, vor allem 9 cm breit ist, wobei der Boden der Aussparung (33) etwa 4 bis 7 cm unterhalb der Seitenfläche (30) des Steins liegt, in welche der Schlitz (32) eingelassen und die Aussparung (33) eingesenkt ist, und wobei die Schmalseite des Schlitzes (32), entsprechend der Schmalseite seines rechteckigen Eingriffsbereichs etwa 3 bis 5 cm beträgt.

11. Mauerstein nach Anspruch 10,
dadurch **gekennzeichnet,**
daß die Breite der Aussparung (30) in etwa derjenigen des Schlitzes entspricht, und wobei die Stärke des Mauersteins (3) zwischen der Stoßfläche (31) und der dieser gegenüberliegenden Schlitzwand etwa 3 bis 4 cm, vor allem 2 cm beträgt.

12. Mauerstein nach einem der Ansprüche 1 bis 11,
dadurch **gekennzeichnet,**
daß die Greifhilfe an zwei einander gegenüberliegenden Stoßflächen des Mauersteins ausgebildet ist.

13. Vorrichtung zur Ausbildung der Greifhilfe in dem Mauerstein nach einem der Ansprüche 1 bis 12, mit Fräswerkzeugen und einer Antriebseinrichtung für die Fräswerkzeuge,
dadurch **gekennzeichnet,**
daß die Antriebseinrichtung einen Kurbeltrieb (2) umfaßt, an den abtriebseitig das Fräswerkzeug (1) zur Ausbildung der Greifhilfe angeschlossen ist.

14. Vorrichtung nach Anspruch 13,
dadurch **gekennzeichnet,**
daß zur Herstellung der Aussparung (30) zwischen Stoßfläche und Schlitzeingang ein drehangetriebenes Fräswerkzeug (63) vorgesehen ist, dessen Drehachse parallel zur Schubrichtung des Kurbeltriebs (2) verläuft und daß das drehangetriebene Fräswerkzeug (63) gegenüber dem kurbelangetriebenen Fräswerkzeug (57) zurückgesetzt angeordnet ist.

15. Vorrichtung nach Anspruch 13 oder 14 zur gleichzeitigen Ausbildung der Greifhilfe in wenigstens zwei Stoßfläche an Stoßfläche aneinandergrenzenden Mauersteinen,
dadurch **gekennzeichnet,**
daß der Kurbeltrieb (2) zwei nebeneinander angeordnete Schubstangen (36) umfaßt, und daß das gegebenenfalls vorgesehene drehangetriebene Fräswerkzeug (63) mit seiner Drehachse zwischen den beiden Schubstangen (56) angeordnet ist.

16. Vorrichtung nach Anspruch 15,
dadurch **gekennzeichnet,**
daß der Kurbeltrieb und der Drehantrieb für das rotierende Fräswerkzeug (63) über ein gemeinsames Getriebe an eine Antriebswelle (50).

17. Vorrichtung nach Anspruch 15 oder 16,
dadurch **gekennzeichnet,**
daß das an die Schubstangen angeschlossene Fräswerkzeug (57) ein im wesentlichen U-förmig gebogener Profildraht ist, der mit einem seiner Schenkel an die Schubstange (56) angeschlossen ist.

18. Vorrichtung nach Anspruch 17,
dadurch **gekennzeichnet,**
daß das rotierende Fräswerkzeug (63) ein im wesentlichen gleichschenklig dreieckig gebogener Profildraht mit senkrecht zur Drehrichtung verlaufender Basisseite ist.

19. Vorrichtung nach Anspruch 13,
dadurch **gekennzeichnet,**
daß zur Herstellung der Aussparung (33) zwischen Stoßfläche (31) und Schlitzeingang zumindest ein kürzeres Fräswerkzeug (26) in der Schwingebene des Kurbeltriebs (2) seitlich versetzt zum Fräswerkzeug (25) für die Schlitzausbildung an den Kurbeltrieb angeschlossen ist.

20. Vorrichtung nach Anspruch 19,
dadurch **gekennzeichnet,**
daß das kürzere und das längere Fräswerkzeug (25, 26) mit der selben Schubstange (25) des Kurbeltriebs (2) verbunden sind.

21. Vorrichtung nach Anspruch 19 oder 20,
dadurch **gekennzeichnet,**
daß die Fräswerkzeuge (25, 26) im wesentlichen U-förmig gebogene Profildrähte sind, die mit den freien Schenkelenden an die Schubstange (5) des Kurbeltriebs (2) angeschlossen sind, und deren Schenkel parallel zur Schubrichtung verlaufen.

22. Vorrichtung nach Anspruch 21,
dadurch **gekennzeichnet,**
daß die U-förmigen Profildrähte zur Erzeugung des Schlitzes in eine Ebene verlaufen, die seitlich versetzt ist zu der Ebene, in welcher der Profildraht zur Erzeugung der Aussparung verläuft.

23. Vorrichtung nach Anspruch 21 und 22,
dadurch **gekennzeichnet,**
daß der an das U-Profil des kürzeren Fräswerkzeugs (26) angrenzende Schenkel des längeren Fräswerkzeugs (25) für die Schlitzausbildung anschließend an die vorneliegende Basis des U-förmigen kürzeren Fräswerkzeugs zur Ausbildung einer hinterschnittenen Schlitzwand (33a) geneigt verläuft.

24. Vorrichtung nach einem der Ansprüche 19 bis 23 zur gleichzeitigen Ausbildung der Griffhilfe in wenigstens zwei Stoßfläche an Stoßfläche aneinandergrenzend angeordneten Mauersteinen,
dadurch **gekennzeichnet,**
daß die beiden Fräswerkzeuge (25, 26) zur gleichzeitigen Herstellung von zwei Griffschlitzen seitlich versetzt in einer Ebene angeordnet sind, die lotrecht zur Schwingebene des Kurbeltriebs (2) verläuft.

25. Vorrichtung nach einem der Ansprüche 13 bis 24,
dadurch **gekennzeichnet,**
daß die Fräsanordnung (1, 2) parallel zur Längserstreckung der Schubstange (5) des Kurbeltriebs relativ zur Schubbewegung des Kurbeltriebs verstellbar ist.

26. Vorrichtung nach einem der Ansprüche 13 bis 25,
dadurch **gekennzeichnet,**
daß die Fräsanordnung (1, 2) in der Schwingebene des Kurbeltriebs (2) quer, vor allem lotrecht zur Schubstange (5) verstellbar ist.

27. Vorrichtung nach Anspruch 25 oder 26
dadurch **gekennzeichnet,**
daß die Verstellung der Fräsanordnung (1, 2) durch eine entsprechende Bewegung des gesamten Antriebs bewirkt wird.

28. Verfahren zum Herstellen des Mauersteins nach einem der Ansprüche 1 bis 12 mittels der Vorrichtung nach einem der Ansprüche 13 bis 27,
dadurch **gekennzeichnet,**
daß wenigstens zwei grüne bzw. ungehärtete Mauersteine Stoßfläche an Stoßfläche aneinandergrenzend angeordnet werden,
die Vorrichtung so an zwei in einer gemeinsamen Ebene liegenden Seitenfläche des Mauersteins angeordnet werden, daß die Symmetrieebene der spiegelsymmetrisch zueinander angeordneten Fräswerkzeuge koplanar zu den aneinandergrenzenden Mauersteinstoßflächen verläuft, wobei die Schubstange des Kurbeltriebs der Vorrichtung parallel zur Flächennormalen der in der gemeinsamen Ebene liegenden Seitenfläche des Mauersteins verläuft, und
die Vorrichtung auf die in der gemeinsamen Ebene liegenden Seitenflächen zugeschoben und damit die stirnseitigen Fräswerkzeuge in das Material der Mauersteine hineingefahren wird, bis die vorbestimmte Tiefe des Schlitzes erreicht ist.

29. Verfahren nach Anspruch 28,
dadurch **gekennzeichnet,**
daß gleichzeitig zum Vorschieben der Fräswerkzeuge ein seitliches Hin- und Herbewegen der Fräswerkzeuge in der Schwingebene des Kurbeltriebs erfolgt.

30. Verfahren nach Anspruch 28 oder 29,
dadurch **gekennzeichnet,**
daß bei Erreichen der vorbestimmten Schlitztiefe zur Ausbildung einer hinterschnittenen Schlitz-Griffseitenwand ein seitliches Hin- und Herbewegen der Fräswerkzeuge in eine Ebene senkrecht zur Schwingebene des Kurbeltriebs erfolgt.
